# EUROPÄISCHE PATENTSCHRIFT

(11) **EP 2 822 753 B1**
(45) Veröffentlichungstag und Bekanntmachung des Hinweises auf die Patenterteilung: **10.04.2019**
(21) Anmeldenummer: 13714541.3
(22) Anmeldetag: 28.02.2013
(51) Int. Cl.: B29C 67/00, B22F 3/105

(54) **VERFAHREN UND VORRICHTUNG ZUM HERSTELLEN DREIDIMENSIONALER MODELLE**
METHOD AND DEVICE FOR PRODUCING THREE-DIMENSIONAL MODELS
PROCÉDÉ ET DISPOSITIF DE FABRICATION DE MODÈLES TRIDIMENSIONNELS

(30) Priorität: 06.03.2012 DE 102012004213
(43) Veröffentlichungstag der Anmeldung: 14.01.2015
(73) Patentinhaber: Voxeljet AG, 86316 Friedberg (DE)
(72) Erfinder: GÜNTHER, Johannes, 86163 Augsburg (DE); GÜNTHER, Daniel, 80797 München (DE); HARTMANN, Andreas, 86391 Stadtbergen (DE)
(74) Vertreter: Helbig, Christian
(86) Internationale Anmeldenummer: PCT/DE2013/000106
(87) Internationale Veröffentlichungsnummer: WO 2013/131505

(56) Entgegenhaltungen:
- EP-A1- 1 872 928
- EP-A1- 2 289 462
- DE-A1- 19 533 960
- DE-C1- 19 530 295

## Beschreibung

Die Erfindung bezieht sich auf ein Verfahren zum Herstellen dreidimensionaler Modelle gemäß dem Patentanspruch 1 sowie einer entsprechenden Vorrichtung gemäß dem Patentanspruch 6.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpartikelmaterial z.B. durch Abbürsten befreit werden.

In ähnlicher Weise arbeiten auch andere Partikelmaterial-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder "3D-Druckverfahren" zusammengefasst.

Allen oben genannten Ausführungsformen ist gemein, dass bei der Erzeugung der gewünschten Formen in Baubehältern die Größe und Gewicht der erzeugten Form, insbesondere durch den Baubehälter, begrenzt ist.

In der deutschen Patentanmeldung DE 10 2010 015 451 A1 wird ein Verfahren beschrieben, mit dem es möglich ist, Formkörper großer Länge herzustellen. Dazu wird es vorgeschlagen, eine Schüttung eines Partikelmaterials auf ein Förderband auftragen und darauf schichtweise dreidimensionale Bauteile aufzubauen. Die Bauteile können dabei dann kontinuierlich aufgebaut werden und an vom Förderband bei beispielsweise einem Austritt aus der Vorrichtung entpackt werden. Die Bauteillänge bei einem solchen Verfahren ist dabei allerdings durch die Länge der eingesetzten Vorrichtung begrenzt.

Aufgabe der vorliegenden Erfindung ist es nun, ein 3D-Druckverfahren und eine Vorrichtung und ein Verfahren zur Verfügung zu stellen, mit denen es möglich ist, sehr lange und schwere Bauteile herzustellen und die Nachteile des Standes der Technik zu verbessern oder gänzlich zu vermeiden.

Diese Aufgabe wird durch ein Verfahren gemäß dem Patentanspruch 1 und eine Vorrichtung nach Patentanspruch 6 gelöst.

Gemäß der vorliegenden Erfindung wird nun ein Verfahren gemäss dem Patentanspruch 1 zum Herstellen dreidimensionaler Gegenstände gemäß Computerdaten durch wiederholtes Aufbringen von Schichten eines Partikel aufweisenden Mediums und selektives Verfestigen des Mediums bereitgestellt, bei dem auf einem Baubereich eine Schüttung aus Medium vorgesehen ist und ein Schichtauftrag des Mediums auf einer mit einem Winkel β an den Baubereich angrenzenden Fläche der Schüttung mittels einer Beschichtungseinheit erfolgt und eine Verfestigung entsprechend Computerdaten mittels einer Verfestigungseinheit erfolgt und beim Aufbau der Gegenstände wird die Schüttung nicht verfahren.

Es wird nun also vorgeschlagen eine stehende Schüttung kontinuierlich aufzubauen wobei gegebenenfalls die Vorrichtungsteile zum Aufbringen und selektiven Verfestigen relativ zur Schüttung bewegt werden.

Dabei weist die Beschichtungs- und Verfestigungseinheit zur Bauebene des Baubereichs einen Winkel α < 90° auf und wird zur Schüttung bewegt.

Gemäß einer besonders bevorzugten Ausführungsform der vorliegenden Erfindung ist dabei der Winkel α kleiner als der Winkel β.

Darüber hinaus ist aber ebenso möglich, dass der Winkel α grösser als der Winkel β ist.

Mit einem Verfahren nach der vorliegenden Erfindung ist es nun möglich, dass die erzeugten Gegenstände ohne ein Stoppen der Erzeugung der Schüttung und dem Durchführen der Verfestigung aus dem Partikelmaterial entpackt werden können. Das Entpacken könnte dabei beispielsweise kontinuierlich erfolgen.

Unter einer Schüttung, oder auch Haufwerke genannt, sind dabei Gemische fester Partikel (beispielsweise Granulate) zu verstehen, die lose vermengt sind.

Zwischen den Partikeln einer Schüttung herrscht als prinzipielle Kraft die Reibung, sowie die Adhäsion. Bei unrunden Partikeln wirkt zusätzlich Selbstsperrung, bei rauen Mikroverklammerung, unter Umständen auch elektrostatische Kräfte.

Unter dem Einfluss der Schwerkraft bildet sich im Haufwerk ein Gleichgewicht der Schubspannungen an den Kontaktflächen durch die die Schüttung ihre stabile Form erhält.

Die Partikel können unterschiedliche Korngrößen und Zusammensetzungen haben. Sie können beispielsweise aus Reinstoffen bestehen oder auch aus fest miteinander verbundenen Gemischen.

Geraten Haufwerke in Bewegung, verhalten sie sich wie Fluide und lassen sich durch fluiddynamische Formeln beschreiben.

Der Winkel β kann dabei auch als Schüttwinkel bezeichnet werden.

Gemäss der vorliegenden Erfindung ist auf einer Schüttkegelfläche, die flach oder auch gebogen sein kann, wie beispielsweise einer Stirnseite der Schüttung, ein Beschichter vorgesehen, der neues Partikelmaterial auf die Schüttung aufträgt.

Vorzugsweise kann es dabei vorgesehen sein, dass der Beschichter über die Schüttung in einem Winkel α zur Baufläche, die vorzugsweise die Horizontale darstellen kann, verfährt, der kleiner als der Schüttwinkel β des Partikelmaterials ist. Gemäß einer solchen bevorzugten Ausführungsform der vorliegenden Erfindung wird sicher gestellt, dass die Schicht neu aufgetragenen Partikelmaterials an der gewünschten Stelle verbleibt und nicht abrutscht.

Darüber hinaus kann es vorteilhafter Weise auch vorgesehen sein, dass beim Aufbau der Gegenstände zusätzlich Begrenzungswände mit aufgebaut werden. Eine solche Ausgestaltung weist den Vorteil auf, dass dadurch die Schüttung gegebenenfalls über durch die Verfestigungseinrichtung erzeugte Begrenzungswände in ihrer Ausdehnung eingeschränkt werden kann.

Gemäß einer besonders bevorzugten Ausführungsform der vorliegenden Erfindung werden ferner Zusatzstrukturen gebildet, die ein Abrutschen von Medium im Schüttkegel erschweren.

Eine Vorrichtung nach der vorliegenden Erfindung zum Herstellen dreidimensionaler Gegenstände gemäß Computerdaten durch wiederholtes Aufbringen von Schichten eines Partikel aufweisenden Mediums und selektives Verfestigen des Mediums, weist auf einem Baubereich eine Schüttung aus Medium und eine Beschichtungseinheit zum Schichtauftrag des Mediums auf einer mit einem Winkel β an den Baubereich angrenzenden Fläche der Schüttung und ferner eine Verfestigungseinheit zum Verfestigen des Mediums entsprechend Computerdaten auf. Beim Aufbau der Gegenstände wird die Schüttung aber nicht verfahren.

Dabei weist bei einer erfindungsgemäßen Vorrichtung die Beschichtungs- und Verfestigungseinheit zur horizontalen des Baubereichs einen Winkel α < 90° auf und ist relativ zur Schüttung bewegbar. Der Winkel α kann dabei je nach Ausgestaltung kleiner, größer oder gleich dem Winkel β sein.

Bei einer Vorrichtung nach der Erfindung weist die Verfestigungsvorrichtung einen Tropfenerzeuger auf.

Gemäß einer bevorzugten Ausführungsform ist unter dem Baubereich ein Boden, vorzugsweise Hallenboden einer Produktionsstätte zu verstehen. Daneben wäre es aber auch möglich dass der Baubereich eine Bauplattform aufweist und/oder verschiebliche Böden umfasst und/oder ein intermittierendes Förderband entlang von Linearantrieben aufweist.

Die Beschichtungs- und Verfestigungseinheit umfassende Einheit wird auf Schienen oder durch Abrollen von Rädern auf der Ebene horizontal bewegt.

Weiterhin Kann es auch vorteilhaft sein, dass sich die Einheit auf durch mitgebildete Wände abstützt.

Vorteilhafterweise lässt sich der Winkel α an der Vorrichtung einstellen, um diese an das Partikelmaterial anzupassen. Auf dieser Seite ist zudem eine Vorrichtung angebracht, die entlang der durch den Beschichter definierten Partikelmaterialebene das Partikelmaterial selektiv verfestigt. Diese Verfestigungseinrichtung ist ein Druckkopf der kleine Flüssigkeitströpfchen auf das Partikelmaterial abgibt, die dazu führen, dass das Partikelmaterial dort lokal begrenzt verfestigt.

Nach Vollendung einer Schicht bestehend aus Beschichtung und anschließender Verfestigung wird die Vorrichtung um die Schichtstärke in Richtung der sich bildenden Schüttung verschoben. Die Vorrichtung kann je nach Baugröße z.B. auf einem Schienensystem verschoben werden. Formschlüssige Antriebe (beispielsweise) Zahnstangen müssen die Präzision der Bewegung gewährleisten.

Die Schüttung kann direkt auf dem Boden aufgebaut werden auf dem die Vorrichtung betrieben wird. Dies kann auch der Hallenboden einer Fertigungshalle sein. Ebenso kann aber auch eine Fertigung im freien stattfinden wenn die Größe der Vorrichtung und der gewünschten Bauteile dies erfordert. Die Vorrichtung kann aber auch auf wechselbaren Plattformen arbeiten.

Ein wesentlicher Vorteil des Verfahrens und der Vorrichtung ist die Einfachheit der technischen Ausführung. Im Vergleich zum Stand der Technik fallen Baubehälter zur Aufnahme der Schüttung weg. Ebenso wird die Schüttung nicht relativ zu irgendeiner Wandung bewegt, was den Verschleiß, die Antriebskräften und die Antriebsleistungen reduziert und die Neigung zu Störungen in der Schüttung verbessert.

Damit ein Abrutschen der Schüttung verhindert wird, kann eine Gitterstruktur mit gedruckt werden. Diese stabilisiert die Partikelmaterialschüttung und hilft auch in der späteren Ausbrechzone, das unkontrollierte Abfließen von Partikelmaterial zu verhindern.

Die Länge der Schüttung von der Druckeinheit bis zur Ausbrechzone hängt vom jeweiligen Verfestigungsprozess ab. Sie kann beispielsweise durch einfaches Abmessen bestimmt werden. So kann die Länge so ausgelegt sein, dass die Schüttung eine gewisse Verweildauer in der zusammenhängenden Situation verbleibt, um z.B. der Flüssigkeit die Zeit zur Reaktion mit dem Partikelmaterial zu geben, um eine ausreichende Festigkeit zu entwickeln. Es kann auch sein, dass die Verweildauer genutzt wird, um die Schüttung kontrolliert von der der Verfestigungszone gegenüber liegenden Seite her abzukühlen. Es sind auch Fälle denkbar, wo beide Effekte gemeinsam genutzt werden. In beiden Fällen entsteht ein Gradient, der konform mit dem Schichtbau durch die Schüttung verläuft.

Im Gegensatz zu Verfahren in Baubehältern erreichen in diesem Fall die Schichten in derselben Reihenfolge die Ausbrechzone wie sie aufgebaut wurden. D.h. die Verweildauer in der Partikelmaterialschüttung kann für alle Bereiche nahezu konstant gehalten werden. Dies ist ein großer Vorteil, da so die Aushärtung viel kontrollierter ablaufen kann und damit weniger Verzug einhergeht.

Die Ausbrechzone bei dem hier beschriebenen Verfahren und der Vorrichtung ist im Vergleich zu konventionellen Verfahren freier zugänglich. Wird die Schüttung auf einem Hallenboden aufgebaut kann jede Form leicht mit Werkzeug, Gabelstaplern oder einem Hallenkran geborgen werden. Eine große Vorrichtungslänge ermöglicht den Zeitpunkt des Entpackens nahezu beliebig zu wählen.

Da die Bauteile in Schwerkraftrichtung übereinander gestapelt liegen können, ist es evtl. erforderlich, die Bauteile in zusätzlich mit zu bauenden Stützstrukturen zu betten, die auch bei Abwesenheit des umliegenden Partikelmaterials eine ausreichende Stützwirkung entfalten und die Bauteile in Position halten, bis sie entnommen werden.

Ist das Partikelmaterial im Prozess wieder verwendbar, kann es in der Ausbrechzone gesammelt und über eine evtl. Aufbereitungsstrecke dem Auftragsprozess wieder zugeführt werden. In der Aufbereitungsstrecke kann z.B. eine Siebung des Partikelmaterials und oder eine geregelte Zufuhr von frischem Partikelmaterial notwendig sein.

Bei horizontaler Orientierung der Förderebene, wirkt sich die Verfestigungsdauer bzw. die Ausbrechdauer rein auf die Länge der Vorrichtung aus.

Mit einer derartigen Anlage lassen sich eine Vielzahl unterschiedlicher Materialien verarbeiten. Dazu zählt Sand, Gips, Metallpartikelmaterial, bzw. andere anorganische Partikelmaterialien aber auch Kunststoffpartikelmaterial, Mehl und weitere organische Partikelmaterialien.

Die Anlage und der Prozess lässt ein weites Feld unterschiedlicher Applikationen wie z.B. die Herstellung von Formen und Modellen für den Metallguss aber auch die Herstellung von Bauteilen verschiedenster Art zu. Ein interessanter Vorteil ist auch, dass sich durch die kontinuierliche Vorgehensweise auch längere Bauteile herstellen lassen, ohne die Vorrichtung verändern zu müssen.

Zur näheren Erläuterung wird die Erfindung anhand bevorzugter Ausführungsbeispiele nachfolgend unter Bezugnahme auf die Zeichnungen näher beschrieben.

In der Zeichnung zeigt dabei:
Figur 1 einen Schrägriss einer Vorrichtung nach dem Stand der Technik;
Figur 2 eine Schnittdarstellung durch eine Vorrichtung nach dem Stand der Technik;
Figur 3 eine Illustration der Schüttung zur Definition des Maschinenwinkels
Figur 4 eine Schnittdarstellung einer bevorzugten Ausführungsform der Erfindung;
Figur 5 eine Seitenansicht einer besonders bevorzugten Ausführungsform der Erfindung;
Figur 6 eine Illustration einer nach der Erfindung erzeugten Schüttung;
Figur 7 eine Schnittdarstellung einer Vorrichtung;
Figur 8a eine Seitenansicht einer weiteren Vorrichtung;
Figur 8b eine Ansicht der Ausführungsform von Figur 8a von oben.
Figur 9 eine Schnittdarstellung einer noch weiteren bevorzugten Ausführungsform der Erfindung;
Figur 10 eine Darstellung von einer erfindungsgemäß bevorzugen Vorrichtung mit Bauplattformen;
Figur 11 eine Darstellung von einer erfindungsgemäß bevorzugen Vorrichtung mit Materialsilo; und
Figur 12a -d die verschiedenen Verfahrensschritte einer bevorzugten Ausführungsform der Erfindung.

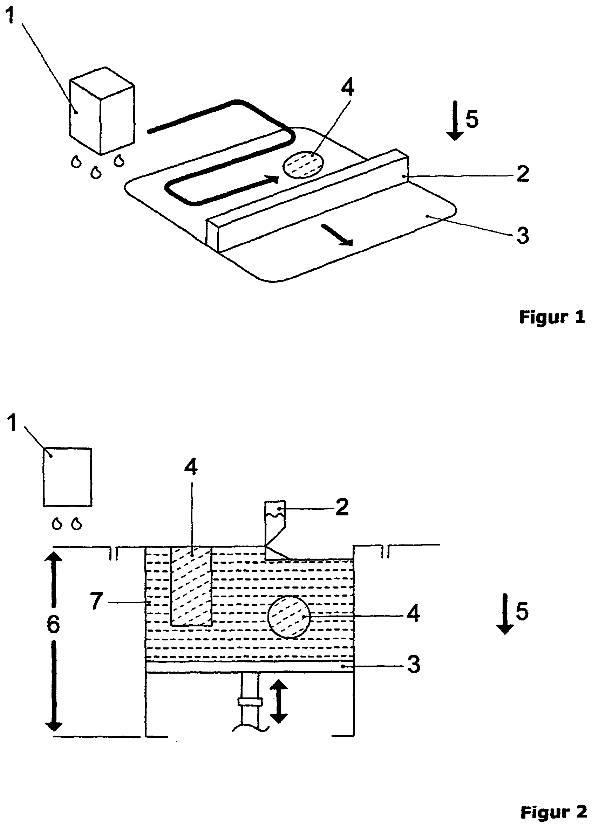

Figur 1 zeigt eine Vorrichtung nach dem Stand der Technik. Ein Beschichter 2 legt eine Schicht aus Partikelmaterial auf eine Bauplattform 3. Im Anschluss wird gemäß von Computerdaten selektiv das Partikelmaterial verfestigt. In Figur 1 ist dieser Bereich mit 4 gekennzeichnet. Die Senkrechte ist hierbei mit dem Bezugszeichen 5 bezeichnet. Nach der Verfestigung wird die Bauplattform 3 um eine Schichtstärke abgesenkt und es wird erneut eine Schicht erzeugt.

In Figur 2 ist die gleiche Vorrichtung im Schnitt dargestellt. Es sind bereits mehrere Schichten erzeugt. Begrenzend bei Verfahren des Standes der Technik ist der auf der Abbildung gezeigte Baubehälter 7. Nach einer gewissen Bauhöhe 6 muss der Behälter 7 entleert oder getauscht werden.

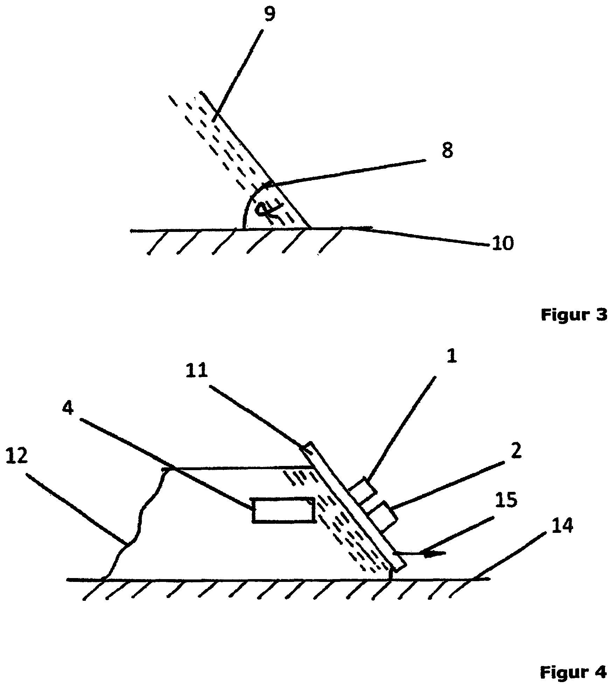

Figur 3 illustriert eine Schüttung, die nicht einschränkend aus Partikelmaterial bestehen kann. Diese weist eine stirnseitige Ebene auf, die einen gewissen Winkel 8 zu einer horizontalen Ebene 10 einschließt. Die Schüttung besteht aus einzelnen Schichten 9 und kann wie die Schrift DE 10 2010 015 451 A1 aufzeigt erzeugt werden. Der hier dargestellte Winkel 8 wird im folgenden Maschinenwinkel genannt.

Figur 4 stellt eine bevorzugte Ausführungsform der Erfindung dar. Die Figur zeigt einen mit der Figur 2 vergleichbaren Schnitt. Die Partikelmaterialschüttung wird hier gemäß Anspruch 1 nicht relativ zur Maschine bewegt sondern steht still. Ein Koordinatensystem in der Aufstellhalle gilt hierbei als fest. Die Vorrichtung hingegen wird bewegt.

Nach einiger Laufzeit der Anlage ergibt sich das in Figur 4 dargestellte Szenario. Die Materialschüttung 12 wird mit zunehmender Bauzeit immer länger wobei sich die Trägereinheit 11 mit Verfestigungseinheit 1 und Beschichter 2 in der Baurichtung 15 über eine horizontale Ebene 14 bewegen. Die zu erzeugenden Formteile 4 liegen ruhend in der Schüttung.

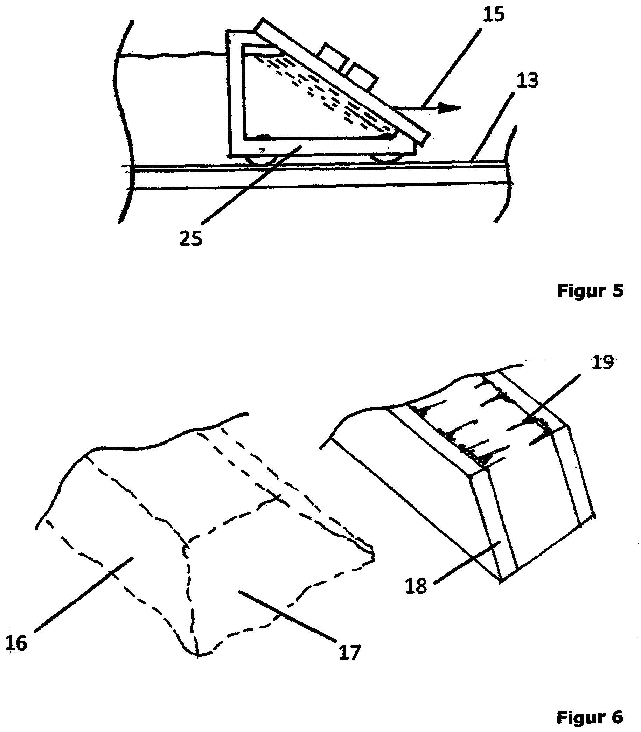

Eine technische Ausgestaltung der Vorrichtung zeigt Figur 5. Die Trägereinheit ist hierbei als Fahrzeug 25 ausgeführt. Dieses wird über einen Schienenstrang 13 geführt. Der Schienenstrang 13 wird je nach geforderter Präzision und dem eingesetzten Messsystem zur Positionserfassung ausgeführt. Hierzu können Linearführungssysteme für höchste Führungsgenauigkeit und Steifigkeit eingesetzt werden.

Ebenso können Schienen ähnlich Eisenbahnschienen verwendet werden, wenn keine große Genauigkeit erforderlich ist. Ein einfaches Abrollen von Rädern auf der Ebene 14 ist möglich aber mit einem angepassten Messaufwand verbunden.

Als Antriebsysteme können unterschiedliche Mechanismen eingesetzt werden. Sehr hohe Präzision der Verfahrbewegung und damit der erzeugten Schichtstärke kann mit kombinierten Lineareinheiten erzielt werden, die einen Kugelumlauftrieb enthalten. Auch mit Zahnstangen und vorgespannten Zahnrädern sind geringe Positionsabweichungen zu erzielen. Auch reibschlüssige Antriebe sind verwendbar. Die Positionsmessung und Regelung muss dieser Antriebsart aber angepasst werden.

Figur 6 zeigt eine Schüttung aus Partikelmaterial. Eine solche Schüttung würde durch einen Beschichter erzeugt werden der einen horizontalen Schlitz aufweist, aus dem Partikelmaterial auslaufen kann. Durch den natürlichen Böschungswinkel des Materials ergibt sich als geometrische Grundform ein Pyramidenstumpf. Die Vorrichtung muss dann, um ein Eindringen des Materials in das Schienensystem zu verhindern entsprechend breit ausgeführt werden.

Dieser Umstand kann mit einer Vorrichtung nach Anspruch 4 verbessert werden. Hierbei werden durch die Verfestigungseinheit 1 Wände erzeugt, die die Schüttung seitlich begrenzen. Auf diese Weise entsteht ein Parallelepiped mit einem deutlich geringeren Flächenbedarf.

Das Entpacken der Formteile 4 kann je nach verwendetem Verfestigungsmechanismus einige Zeit nach dem Erzeugen der Schichten erfolgen. Maßgeblich für die Auspacklänge ist die Verfestigungszeit und der Sicherheitsabstand der notwendig ist, um den Bauprozess durch das Entpacken nicht zu stören.

Wird die Materialschüttung 12 direkt auf dem Hallenboden 14 aufgebaut, kann besonders einfach entpackt werden. Hierzu können sämtlich Werkzeuge wie Gabelstapler oder Kräne verwendet werden. Das Erfindungsgemäße Schienensystem 13 ist dann dementsprechend robust auszuführen.

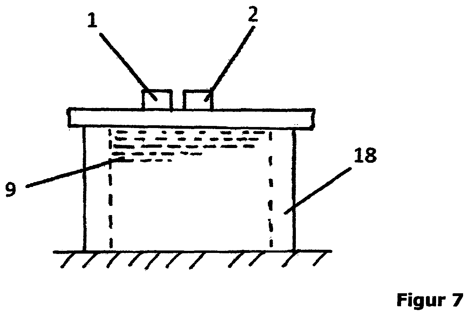

Eine weitere Ausführungsform der Erfindung ist in Figur 7 dargestellt. Auch hier kommt eine auf einer horizontalen Ebene stehende Schüttung zum Einsatz. Der Winkel zwischen der Trägereinheit 11 und der horizontalen Ebene beträgt hier 0 Grad. Im Gegensatz zur Schrift DE 10 2006 030 350 A1 erfolgt die vertikale Bewegung nicht durch ein Achssystem, sondern durch ein Fortschreiten der Trägereinheit 11 an den bereits gebauten Wänden der Schüttung. Die Wände weisen eine spezielle Geometrie auf, die ein präzises Positionieren gewährleistet.

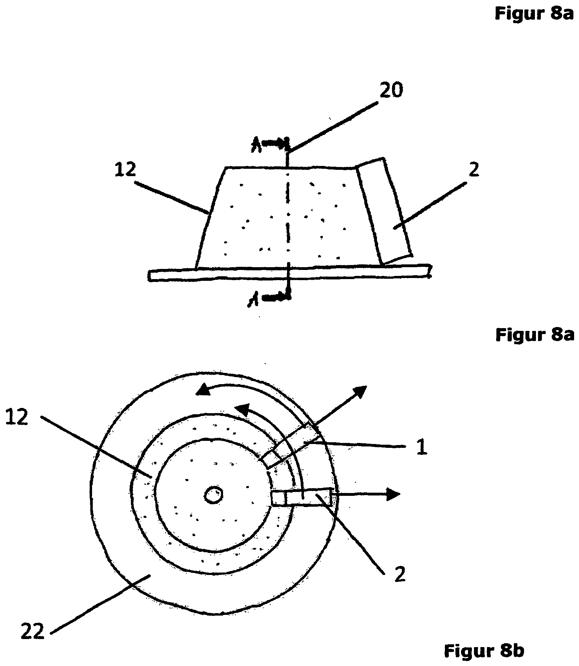

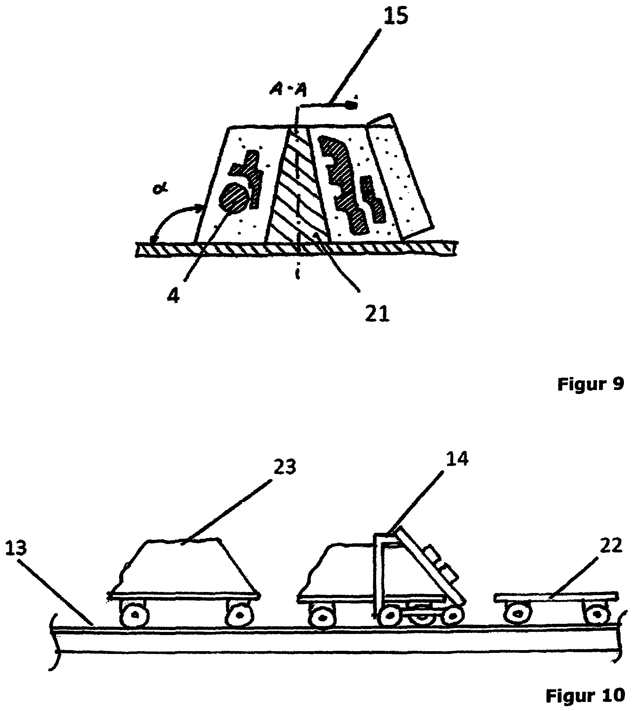

Figur 8 und Figur 9 zeigen eine nicht beanspruchte Vorrichtung. Hierbei wird abweichend von den obigen Ausführungen die Schüttung nicht linear sondern rotatorisch erzeugt. Hierzu wird die Trägereinheit in einer evolventenförmigen Bewegung um die Maschinenachse 20 geführt. Der Beschichter ist gegenüber den obigen Beschreibungen um 90° gedreht und kann kontinuierlich betrieben werden. Die Verfestigungseinrichtung kann ebenso kontinuierlich arbeiten. Für den Start der Anlage kann ein Aufbaukegel 21 verwendet werden. Dieser Vorrichtungstyp erfordert es, die Daten der Formen 4 nicht nur linear sondern anhand von Polarkoordinaten zu verzerren.

Statt die Materialschüttung auf dem Hallenboden aufzubauen können auch Bauplattformen 22 verwendet werden. Diese können wie Figur 10 zeigt ebenso das Schienensystem der Vorrichtung 13 verwenden. Nach einem Bauvorgang können dann die Plattformen gegebenenfalls ausgetauscht werden.

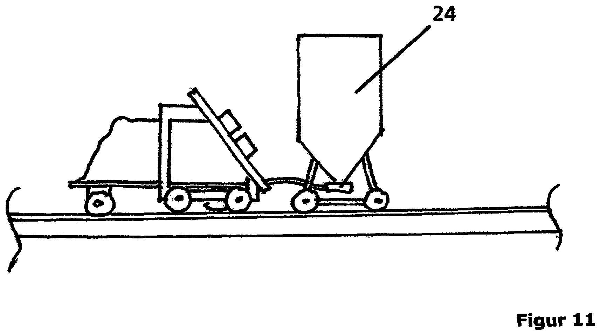

Die für den Bauprozess notwendigen Materialien können über flexible Leitungen der Vorrichtung zugeführt werden. Dies könnte z.B. Partikelmaterial, Binder oder elektrische Energie sein. Werden kritische Materialien eingesetzt oder die Begebenheiten vor Ort lassen es nicht zu, können die Materialien auch mit der Trägereinheit verfahren werden. Figur 11 zeigt beispielhaft ein auf dem Maschinenschienensystem mitbewegtes Partikelmaterialsilo 24.

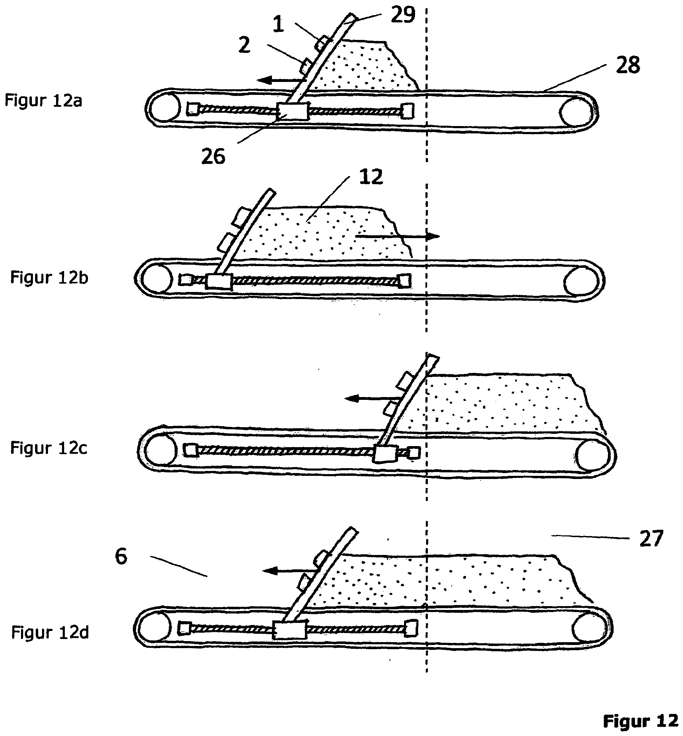

Figur 12a - d zeigt eine bevorzugten Ausführung, bei der die Materialschüttung 12 auf einem Förderband 28 aufgebaut wird. Das Förderband 28 erstreckt sich über den Baubereich 6 und einen Auspackbereich 27.

Im Bauprozess wird eine Prozessebene 29, die die schichtgenerierenden Werkzeuge 1 und 2 trägt mit Linearantrieben 26 innerhalb des Baubereichs 6 schichtweise verfahren.

Das Förderband 28 steht solange still, bis der gesamte erste Baubereich 6 bebaut wurde.

Anschließend wird der fertig gebaute Teil mit dem Förderband in den Auspackbereich 27 transportiert. Gleichzeitig fährt die Prozessebene 29 in ihre Ausgangsposition. Sind die Prozessebene 29 und die Materialaufschüttung 12 positioniert, wird der Bauvorgang direkt auf der Materialaufschüttung 12 fortgeführt. Im Auspackbereich 27 können die fertig gebauten Teile entnommen werden. Der Bauprozess muss dabei nicht angehalten werden.

### Bezugszeichenliste

- 1: Verfestigungseinrichtung
- 2: Beschichter
- 3: Bauplattform
- 4: Bauteil (z.T. in Entstehung)
- 5: Schwerkraftrichtung
- 6: Baubereich
- 7: Baubehälter
- 8: Maschinenwinkel
- 9: Schichten
- 10: Horizontale Bezugsebene
- 11: Einheit mit Beschichter und Verfestigungseinrichtung
- 12: Ortsfeste Schüttung
- 13: Schienensystem
- 14: Hallenboden
- 15: Fertigungsrichtung
- 16: Ausufernde Schüttung
- 17: Durch den Beschichter erzeugte Planfläche
- 18: Durch die Verfestigungseinheit erzeugte Wandung
- 19: Unregelmäßige Deckfläche
- 20: Rotationsachse der Vorrichtung
- 21: Hilfskegel zum Anlagenstart
- 22: Bauplattform
- 23: Schüttung auf einer Bauplattform
- 24: Materialsilo
- 25: Trägerfahrzeug
- 26: Linearantrieb
- 27: Auspackbereich
- 28: Förderband
- 29: Prozessebene

## Patentansprüche

1. Verfahren zum Herstellen dreidimensionaler Gegenstände (4) gemäß Computerdaten durch wiederholtes Aufbringen von Schichten (9) eines Partikel aufweisenden Mediums und selektives Verfestigen des Mediums, wobei auf einem Baubereich (6) eine Schüttung aus Medium vorgesehen ist und ein Schichtauftrag des Mediums auf einer mit einem Winkel β an den Baubereich (6) angrenzenden Fläche der Schüttung mittels einer Beschichtungseinheit (2) erfolgt und eine Verfestigung entsprechend Computerdaten mittels einer Verfestigungseinheit (1) erfolgt, wobei bei einem Aufbau der Gegenstände die Schüttung (23) nicht verfahren wird und die Beschichtungs- und die Verfestigungseinheit (1, 2) zur Bauebene des Baubereichs (6) einen Winkel α < 90° aufweisen, eine die Beschichtungs- und Verfestigungseinheit (1, 2) umfassende Einheit (11) auf Schienen oder durch einfaches Abrollen von Rädern auf der Ebene horizontal relativ zur Schüttung bewegt wird und die Verfestigungsvorrichtung (1) ein Druckkopf ist, der kleine Flüssigkeitströpfchen auf das Partikelmaterial abgibt.

2. Verfahren nach einem der vorhergehenden Ansprüche, **dadurch gekennzeichnet, dass** der Winkel α kleiner ist als der Winkel β.

3. Verfahren nach einem der vorhergehenden Ansprüche, **dadurch gekennzeichnet, dass** ferner begrenzende Wände (18) mitgebaut werden.

4. Verfahren nach einem der vorhergehenden Ansprüche, **dadurch gekennzeichnet, dass** die Beschichtungs- und Verfestigungseinheit (1, 2) auf einem in einem Winkel α zur Bauebene des Baubereichs (6) angeordneten Koordinatensystem bewegt werden und parallel zu Bauebene des Baubereichs (6) bewegt werden.

5. Verfahren nach einem der vorhergehenden Ansprüche, **dadurch gekennzeichnet, dass** ferner Zusatzstrukturen gebildet werden, die ein Abrutschen von Medium erschweren.

6. Vorrichtung zum Herstellen dreidimensionaler Gegenstände (4) gemäß Computerdaten durch wiederholtes Aufbringen von Schichten (9) eines Partikel aufweisenden Mediums und selektives Verfestigen des Mediums, wobei auf einem Baubereich (6) eine Schüttung (23) aus Medium und eine Beschichtungseinheit (2) vorgesehen sind, zum Schichtauftrag des Mediums auf einer mit einem Winkel β an den Baubereich (6) angrenzenden Fläche der Schüttung (23), ferner eine Verfestigungseinheit (1) zum Verfestigen des Mediums entsprechend Computerdaten, wobei bei einem Aufbau der Gegenstände die Schüttung (23) nicht verfahren wird und
die Beschichtungs- und die Verfestigungseinheit (1, 2) zur Horizontalen des Baubereichs einen Winkel α < 90° aufweisen, eine die Beschichtungs- und Verfestigungseinheit (1, 2) umfassende Einheit (11) auf Schienen oder auf Rädern relativ zur Schüttung (23) bewegbar ist und die Verfestigungsvorrichtung (1) ein Druckkopf ist, der kleine Flüssigkeitströpfchen auf das Partikelmaterial abgibt.

7. Vorrichtung nach Anspruch 6, **dadurch gekennzeichnet, dass** die Beschichtungs- und Verfestigungseinheit (1, 2) auf einem in einem Winkel α zu einer Bauebene des Baubereichs (6) angeordneten Koordinatensystem bewegbar ist und parallel zur Bauebene des Baubereichs (6) bewegbar ist.

8. Vorrichtung nach einem der Ansprüche 6 oder 7, **dadurch gekennzeichnet, dass** der Baubereich (6) einen Boden, vorzugsweise Hallenboden einer Produktionsstätte darstellt.

9. Vorrichtung nach einem der Ansprüche 6 bis 8, **dadurch gekennzeichnet, dass** der Baubereich (6) eine Bauplattform aufweist.

10. Vorrichtung nach einem der Ansprüche 6 bis 9, **dadurch gekennzeichnet, dass** der Baubereich (6) verschiebliche Böden umfasst.

11. Vorrichtung nach einem der Ansprüche 6 bis 10, **dadurch gekennzeichnet, dass** sich die Einheit auf mit aufgebauten Wänden abstützt.

## Claims

1. A method for producing three-dimensional objects (4) according to computer data by repeatedly applying layers (9) of a medium containing particles and selectively solidifying said medium, wherein a bed of medium is provided on a construction area (6) and coating of the medium on a surface of the bed adjoining the construction area (6) at an angle β is performed by means of a coating unit (2), and solidification is effected according to computer data by means of a solidification unit (1), wherein the bed (23) is not moved during construction of the objects and the coating and solidification units (1, 2) are arranged at an angle α < 90° to the construction plane of the construction area (6), a unit (11) comprising the coating and solidification unit (1, 2) is moved on rails or by simple rolling of wheels on the plane in a horizontal direction with respect to the bed, and the solidification unit (1) is a print head which discharges small droplets of liquid onto the particulate material.

2. The method according to any one of the preceding claims, **characterized in that** the angle α is smaller than the angle β.

3. The method according to any one of the preceding claims, **characterized in that** limiting walls (18) are further constructed as well.

4. The method according to any one of the preceding claims, **characterized in that** the coating and solidification units (1, 2) are moved on a coordinate system arranged at an angle α to the construction plane of the construction area (6) and are moved parallel to the construction plane of the construction area (6).

5. The method according to any one of the preceding claims, **characterized in that** additional structures are further formed to make the sliding of medium more difficult.

6. A device for producing three-dimensional objects (4) according to computer data by repeatedly applying layers (9) of a medium containing particles and selectively solidifying said medium, wherein a bed (23) of medium and a coating unit (2) are provided on a construction area (6), for coating of the medium on a surface of the bed (23) adjoining the construction area (6) at an angle β, a solidification unit (1) being further provided to solidify the medium according to computer data, wherein the bed (23) is not moved during construction of the objects, and
the coating and solidification units (1, 2) are arranged at an angle α < 90° to the horizontal of the construction area, a unit (11) comprising the coating and solidification units (1, 2) can be moved on rails or on wheels relative to the bed (23) and the solidification unit (1) is a print head which discharges small droplets of liquid onto the particulate material.

7. The device according to claim 6, **characterized in that** the coating and solidification unit (1, 2) can be moved on a coordinate system arranged at an angle α to a construction plane of the construction area (6) and can be moved parallel to the construction plane of the construction area (6).

8. The device according to any one of claims 6 or 7, **characterized in that** the construction area (6) is a floor, preferably the workshop floor of a production facility.

9. The device according to any one of claims 6 to 8, **characterized in that** the construction area (6) comprises a construction platform.

10. The device according to any one of claims 6 to 9, **characterized in that** the construction area (6) comprises displaceable floors.

11. The device according to any one of claims 6 to 10, **characterized in that** the unit is supported on walls built up at the same time.

## Revendications

1. Procédé de fabrication d'objets tridimensionnels (4) selon des données informatiques par application répétée de couches (9) d'un milieu contenant des particules et solidification sélective dudit milieu, dans lequel procédé un lit de milieu est prévu sur une zone de construction (6) et un revêtement du milieu sur une surface du lit adjacent à la zone de construction (6) à un angle β est réalisé au moyen d'une unité de revêtement (2), et une solidification est effectuée selon des données informatiques au moyen d'une unité de solidification (1), le lit (23) n'étant pas déplacé pendant la construction des objets et les unités de revêtement et de solidification (1, 2) présentant un angle α < 90° par rapport au plan de construction de la zone de construction (6), une unité (11) comportant les unités de revêtement et de solidification (1, 2) est déplacée sur des rails ou par simple roulement de roues sur ledit plan dans une direction horizontale par rapport au lit, et l'unité de solidification (1) est une tête d'impression dégageant des gouttelettes de liquide sur le matériau particulaire.

2. Procédé selon l'une quelconque des revendications précédentes, **caractérisé en ce que** l'angle α est inférieur à l'angle β.

3. Procédé selon l'une quelconque des revendications précédentes, **caractérisé en ce que** des parois de limitation (18) sont construites en même temps.

4. Procédé selon l'une quelconque des revendications précédentes, **caractérisé en ce que** les unités de revêtement et de solidification (1, 2) sont déplacées sur un système de coordonnées disposé à un angle α par rapport au plan de construction de la zone de construction (6) et sont déplacées parallèlement au plan de construction de la zone de construction (6).

5. Procédé selon l'une quelconque des revendications précédentes, **caractérisé en ce que** des structures additionnelles sont constituées en plus afin de rendre un glissement de milieu plus difficile.

6. Dispositif de fabrication d'objets tridimensionnels (4) selon des données informatiques par application répétée de couches (9) d'un milieu contenant des particules et solidification sélective dudit milieu, où un lit (23) de milieu et une unité de revêtement (2) sont prévus sur une zone de construction (6), pour le revêtement du milieu sur une surface du lit (23) adjacent à la zone de construction (6) à un angle β, une unité de revêtement (1) étant prévue en plus afin de solidifier le milieu selon des données informatiques, le lit (23) n'étant pas déplacé pendant la construction des objets, et
les unités de revêtement et de solidification (1, 2) présentant un angle α < 90° par rapport à l'horizontale de la zone de construction (6), une unité (11) comportant les unités de revêtement et de solidification (1, 2) étant déplaçable sur des rails ou sur des roues par rapport au lit (23), et l'unité de solidification (1) étant une tête d'impression dégageant des gouttelettes de liquide sur le matériau particulaire.

7. Dispositif selon la revendication 6, **caractérisé en ce que** les unités de revêtement et de solidification (1, 2) sont déplaçables sur un système de coordonnées disposé à un angle α par rapport à un plan de construction de la zone de construction (6) et sont déplaçables parallèlement au plan de construction plane de la zone de construction (6).

8. Dispositif selon l'une quelconque des revendications 6 ou 7, **caractérisé en ce que** la zone de construction (6) représente un plancher, de préférence le plancher d'un atelier d'un site de production.

9. Dispositif selon l'une quelconque des revendications 6 à 8, **caractérisé en ce que** la zone de construction (6) comporte une plateforme de construction.

10. Dispositif selon l'une quelconque des revendications 6 à 9, **caractérisé en ce que** la zone de construction (6) comporte des fonds déplaçables.

11. Dispositif selon l'une quelconque des revendications 6 à 10, **caractérisé en ce que** l'unité est supportée par des parois construites en même temps.
